# EUROPEAN PATENT SPECIFICATION

(11) **EP 0 597 541 B1**
(45) Date of publication and mention of the grant of the patent: **11.03.1998**
(21) Application number: 93203118.0
(22) Date of filing: 08.11.1993
(51) Int. Cl.: G11B 5/187, G11B 23/50, G11B 5/31

(54) **Magnetic head and method of manufacturing the magnetic head**
Magnetkopf und dessen Herstellungsverfahren
Tête magnétique et sa méthode de fabrication

(30) Priority: 13.11.1992 EP 92203486
(43) Date of publication of application: 18.05.1994
(73) Proprietor: Philips Electronics N.V., 5621 BA Eindhoven (NL)
(72) Inventor: Dohmen, Gerardus Maria, c/o Int.Octrooibureau B.V., NL-5656 AA EIndhoven (NL)
(74) Representative: Schrijnemaekers, Hubert Joannes Maria

(56) References cited:
- DE-A- 2 503 221
- PATENT ABSTRACTS OF JAPAN vol. 13, no. 520 (P-963) 21 November 1989 & JP-A-01 211 308 (TOKIN CORP) 24 August 1989
- PATENT ABSTRACTS OF JAPAN vol. 14, no. 48 (P-997) 29 January 1990 & JP-A-01 277 308 (TOKIN CORP) 7 November 1989
- PATENT ABSTRACTS OF JAPAN vol. 16, no. 577 (P-1460) 16 December 1992 & JP-A-04 222 909 (MATSUSHITA ELECTRIC IND CO) 12 August 1992
- PATENT ABSTRACTS OF JAPAN vol. 17, no. 299 (P-1552) 8 June 1993 & JP-A-05 020 625 (CANON ELECTRON INC) 29 January 1993
- PATENT ABSTRACTS OF JAPAN vol. 17, no. 637 (P-1650) 25 November 1993 & JP-A-05 205 209 (FUJI PHOTO FILM CO LTD) 13 August 1993
- PATENT ABSTRACTS OF JAPAN vol. 14, no. 114 (P-1015) 2 March 1990 & JP-A-01 311 408 (VICTOR CO OF JAPAN LTD) 15 December 1989

## Description

The invention relates to a magnetic head having a contact face for cooperation with a tape face of a magnetic tape and comprising a transducing structure having at least one transducing gap terminating in the contact face.

A magnetic head of this type is known from EP-A 0 512 617, according to which claim 1 has been put in the two-part form.

The known magnetic head is a thin-film magnetic head which may comprise one or more inductive and/or magnetoresistive transducing elements. The magnetic head is intended for use in a magnetic tape apparatus which forms part of a magnetic tape system comprising two types of magnetic tape cassettes. One type of cassette comprises a magnetic tape on which information is present in an analog form. The other type of cassette comprises a magnetic tape on which information is present in a digital form. The magnetic tape apparatus is suitable for writing information in a digital form and for reading information in a digital form as well as in an analog form and forms part of a system which is generally known as DCC system.

It has been found that dust and dirt particles may accumulate on a magnetic tape or that particles may coalesce to form agglutinations. The agglutinations may be formed during standstill of the tape, notably on tape guides present in the cassettes and/or on tape cleaning means, particularly in a humid and/or hot environment. If the agglutinations occur at the tape side of the magnetic tape, which is in contact with the contact face of the magnetic head, the contact between the magnetic tape and the magnetic head may be disturbed particularly when information is being written and/or read in a digital form, so that an unacceptable number of write and/or read errors is produced. Although the current magnetic tape apparatuses are provided with error correction systems, practice proves that these systems do not always appear to provide an adequate solution to the problem described.

It is an object of the invention to modify the magnetic head mentioned in the opening paragraph in such a way that also contaminated magnetic tapes can be scanned without any unacceptable output losses.

To this end the magnetic head according to the invention is characterized in that the head structure is provided with at least one cleaning groove for cleaning the tape face, which groove terminates in the contact face and extends at least substantially parallel to the transducing gap and has at least one wall portion oriented at least substantially transversely to the contact face and constituting a scraping edge at the contact face, the cleaning groove at the contact face having a width dimension of between 100 and 300 µm which dimension extends parallel to a direction of movement of the magnetic tape, the scraping edge having a radius of curvature of between 1 and 5 µm.

During operation, the scraping edge at the magnetic head according to the invention is transverse to the direction of movement of the magnetic tape to be scanned and ensures that a side of the magnetic tape moving along the contact face can be cleaned from possibly present agglutinations before the transducing gap is passed. The dirt which is scraped off is collected in the relatively narrow cleaning groove, which may be cleaned after a given period of use of the magnetic head. Although in principle one cleaning groove is sufficient, a cleaning groove may be provided, if desired, at both sides of the transducing gap. It is to be noted that the scraping edge should of course be free from burrs or other irregularities in order to prevent damage of the magnetic tape.

For the sake of clarity it is to be noted that the direction of width of the cleaning groove extends parallel to the direction of movement of the magnetic tape to be scanned. This implies that the width dimension is the dimension which is transverse to the scraping edge. It has been found by experiment that said values for the width dimension are optimum as regards the cleaning function of the groove on the one hand and ensure an optimum tape-head contact on the other hand. A larger groove width may cause the magnetic tape to bend at the area of the cleaning groove. This is particularly the case if means for urging the magnetic tape against the contact face are used.

It has been found that a scraping edge having a radius of curvature of between 1 and 5 µm is particularly functional without any risk of damage of the magnetic tape.

It is to be noted that DE-A 25 03 221 discloses a magnetic head of the so-called bulky type which is positioned in a protective housing. The housing is provided with canals terminating in a sliding face of the housing and intended for scraping contaminants from a magnetic tape passing the magnetic head.

It is further to be noted that JP-A 1-277308 discloses a bulky head provided with X-shaped dust removing grooves formed in a sliding face of a soft magnetic head core.

An embodiment of the magnetic head according to the invention is characterized in that the contact face is constituted by a wear-resistant layer provided on a head face of the magnetic head. The wear-resistant layer present on the head face may comprise, for example Cr₂O₃ or CrN and inhibits wear due to abrasive action of the magnetic tape passing along the magnetic head during operation. A layer thickness of 20 to 100 nm has been found to be sufficient in this respect.

It is to be noted that a self-cleaning head structure having a plurality of head islands raised with respect to a head face is known from US-A 4,809,110. The head islands which, viewed in the direction of the tape, are arranged one behind the other, are relatively widely spaced apart and each of these islands functions as an individual magnetic head provided with its own convex contact face which is bounded by two slanting side faces. It is further to be noted that US-A 4,888,657 describes a magnetic head whose head face has two relatively wide slits used for keeping the active head structure separate from tape guides and for inhibiting the occurrence of an air film proximate to the moving magnetic tape.

The invention also relates to a method of manufacturing the magnetic head according to the invention, which head is provided with the wear-resistant layer.

The method according to the invention is characterized by the following consecutive steps:
- forming the head structure including the transducing structure and the head face,
- providing the cleaning groove,
- rounding the scraping edge and
- coating the head face with the wear-resistant layer.

Providing the cleaning groove before forming the wear-resistant layer has the important advantage that the scraping edge of the cleaning groove can be mechanically processed, for example lapped, so as to remove possible burrs. The cleaning groove may be provided, for example, by means of a sawing operation. The wear-resistant layer may be formed by depositing, for example, Cr₂O₃ or CrN.

The invention also relates to a magnetic tape system.

The magnetic tape system according to the invention is characterized by the presence of a magnetic tape apparatus and a magnetic tape, the magnetic tape apparatus being provided with a magnetic head according to the invention, for writing and/or reading the magnetic tape.

An embodiment of the magnetic tape system according to the invention is characterized in that the magnetic head is provided with first transducing means for scanning information in a digital form on a first type of magnetic tape and with second transducing means for scanning information in an analog form on a second type of magnetic tape, a magnetic tape cassette being present which comprises magnetic tape guide means defining a first contact face for the first type of magnetic tape and a second contact face for the second type of magnetic tape, the cleaning groove being provided in a contact face portion of the magnetic head at the location where the first and second contact faces do not overlap each other.

This embodiment of the magnetic tape system according to the invention leads to the object of providing the cleaning groove in a magnetic head suitable for scanning two types of magnetic tape in such a way that this cleaning groove is effective for only one of the two types. It will be evident from the foregoing that the cleaning groove is effective for the magnetic tape which is intended for digital recording.

An embodiment of the magnetic tape system according to the invention is characterized in that the magnetic tape cassette is provided with a tape pressure element for urging the magnetic tape against the contact face of the magnetic head. An optimum contact between the tape and the head is achieved by the simultaneous action, during operation, of the narrow cleaning groove and the tape pressure element.

An embodiment of the magnetic tape system according to the invention is characterized in that the magnetic tape apparatus has a drive spindle and the magnetic tape extends between two reels of a magnetic tape cassette, which reels are coupled by means of a drive belt, the magnetic tape cassette being provided with a drive wheel which can be coupled to the drive spindle and cooperates with the drive belt. The use of the magnetic head according to the invention in this known system has the advantage that the magnetic tape can be displaced across the contact face of the magnetic head at a relatively low tape force but at a high speed during writing and/or reading signals.

An embodiment of the magnetic tape system according to the invention is characterized in that during operation the magnetic head can be displaced parallel to the transducing gap with respect to the magnetic tape, while the cleaning groove extends from a first edge to a second edge of the contact face. This provides the possibility of scanning the magnetic tape, which is guided linearly along the magnetic head, with a relatively narrow gap configuration in a number of steps. In other words, the number of transducing gaps of the magnetic head may be much smaller than the number of longitudinal tracks on the magnetic tape.

An embodiment of the magnetic tape system according to the invention is characterized in that the magnetic tape extends between two reels and the magnetic tape apparatus has at least one drive roller and a pressure roller arranged opposite said drive roller for displacing the magnetic tape along the magnetic head, while during operation the magnetic tape passes the cleaning groove and subsequently the transducing gap. Due to the provided magnetic head or magnetic heads according to the invention, this embodiment is particularly suitable as a "high speed" duplicating system.

Since increasingly narrow tracks are used on the magnetic tape in the above-mentioned systems, the systems become more and more sensitive to dust particles on the magnetic tape. The magnetic head according to the invention solves this problems in an efficient manner.

The afore-mentioned and other aspects of the invention will be apparent from and elucidated with reference to the embodiments described hereinafter. In the drawings
Fig. 1 shows a first embodiment of the magnetic tape system according to the invention with a magnetic tape apparatus and two mutually different magnetic tape cassettes, both being suitable for cooperation with the apparatus,
Fig. 2 is a cross-section of a portion of a magnetic tape cassette located proximate to the magnetic head aperture during cooperation with a magnetic head according to the invention,
Fig. 3 shows a guide means for a magnetic tape provided with information in a digital form at the location of the magnetic head according to the invention in a recording/reproducing situation,
Fig. 4 shows a guide means for a magnetic tape provided with information in an analog form at the location of the magnetic head according to the invention in a recording/reproducing situation,
Fig. 5 is a side elevational view of an embodiment of the magnetic head according to the invention, provided with a wear-resistant layer,
Fig. 6 is a plan view of the magnetic head of Fig. 5, without a wear-resistant layer,
Fig. 7 shows a detail of the magnetic head of Fig. 5,
Fig. 8 shows diagrammatically a second embodiment of the magnetic tape system according to the invention, and
Fig. 9 shows diagrammatically a third embodiment.

It is to be noted that the Figures are drawn at arbitrary scales which do not always correspond to each other.

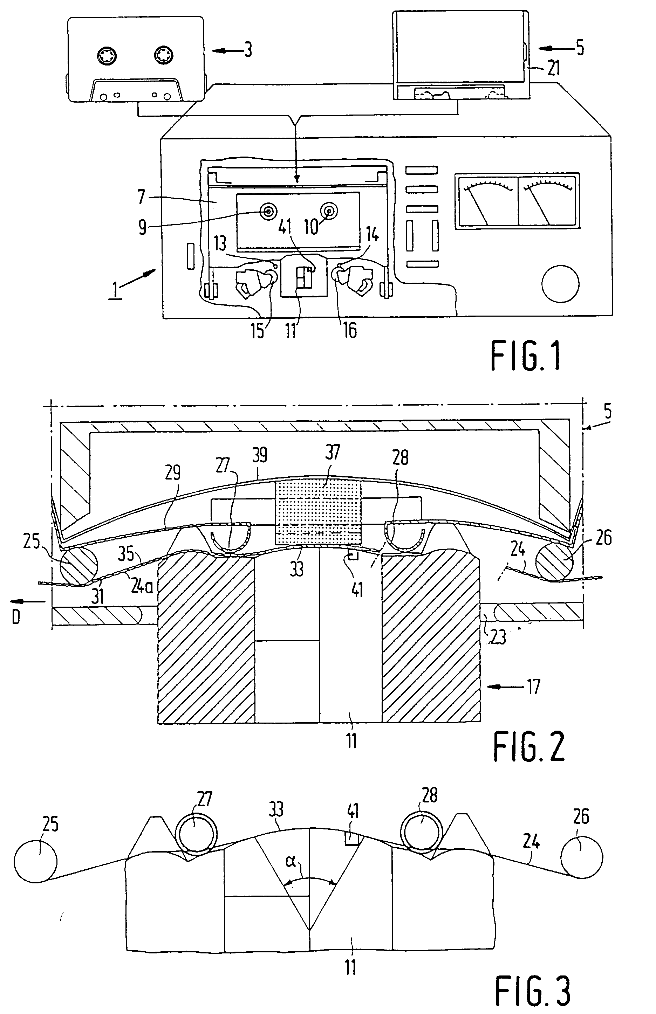

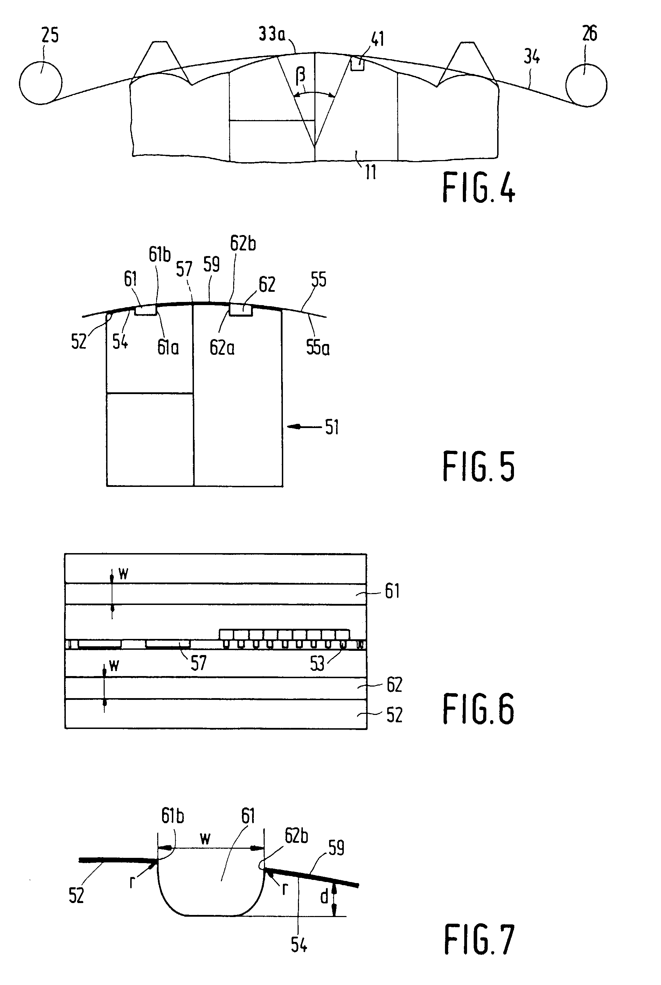

The magnetic tape system shown in Fig. 1 comprises a magnetic tape apparatus 1, a compact cassette 3 comprising a magnetic tape 34 (see Fig. 4) with information in an analog form and a DCC cassette 5 comprising a magnetic tape 24 (see Fig. 2) provided with or suitable for storing information in a digital form. The apparatus 1 has a holder 7 for accommodating the cassettes. Two reel spindles 9 and 10 are provided for cooperation with reel hubs of the cassettes. The apparatus is provided with a magnetic head 11 according to the invention, with which both the magnetic tape in the cassette 3 can be read and the magnetic tape in the cassette 5 can be written and read. The apparatus 1 is also provided with two capstans 13 and 14 and two pressure rollers 15 and 16 cooperating with the capstans.

Fig. 2 shows the cooperation between the magnetic tape cassette 5 provided with the magnetic tape 24 and a magnetic tape unit 17 provided with the magnetic head 11. The cassette 5 has a front wall 19 of a housing 21 (see Fig. 1). The front wall 19 has an aperture 23 for passing the magnetic head unit 17. During scanning, a tape section 24a of the magnetic tape 24 moving in a direction D is guided proximate to the aperture 23 by tape guide pins 25 and 26 which form part of the housing 21, and by tape guides 27 and 28 which form part of a tape guide element 29. A first side 31 of the magnetic tape 24, *i.e*. the coating side provided with a magnetic layer, engages a contact face 33 of the magnetic head 11 and a second side 35, the rear side, is in contact with a tape pressure element 37 in the form of a pressure felt of a tape pressure element 39 which is present in the housing 21. The tape pressure felt 37 evenly urges the magnetic tape 24 against the contact face 33 of the magnetic head 11 so as to ensure a correct signal transmission. The cassette housing 21 also accommodates a tape cleaning element (not shown in the drawing) for cooperation with the coating side 31 of the magnetic tape.

Figs. 3 and 4 show the difference in the magnetic head 11 between the contact face 33, which is present when the magnetic tape 24 of the DCC cassette 5 is in the recording/reproducing situation, and a contact face 33a, which is present when the magnetic tape 34 of the compact cassette 3 is in the reproducing situation. In the recording/reproducing situation of the magnetic tape 24 shown in Fig. 3 the contact angle is denoted by α, while in the reproducing situation of the magnetic tape 34 shown in Fig. 4 the contact angle is denoted by β. Since the tape guides 27 and 28 are not used when the magnetic tape 34 is being scanned, the angle β is considerably smaller than the angle α.

The magnetic head 51 according to the invention, shown in Figs. 5, 6 and 7 is made by means of thin-film techniques and has a transducing structure with nine first transducing gaps 53 for recording and reproducing information in a digital form on and from a magnetic tape 55 and two second transducing gaps 57 for reproducing information in an analog form from a magnetic tape. The magnetic head 51 has a head face 52 formed by grinding and polishing, in which head face two cleaning grooves 61 and 62 are formed, for example, by means of a sawing operation. The cleaning grooves 61 and 62 extend parallel to the transducing gaps 53 and 57 and in this embodiment they have, at least at the contact face 59, a groove width w of approximately 200 µm extending in the direction of the tape. The cleaning grooves 61 and 62 each have wall portions 61a and 62a, respectively, directed approximately transversely to the head face 52. The wall portions 61a and 62a constitute sharp scraping edges 61b and 62b, respectively. After the formation of the cleaning grooves 61 and 62 and after a subsequent lapping operation, for example by means of a lapping tape moving across the head face so as to slightly round the scraping edges 61b and 62b, a wear-resistant layer 54 is provided on the head face 52. In this embodiment the wear-resistant layer 54 is formed by a sputtered chromium nitride layer having a thickness of approximately 60 nm and the sharp scraping edges 61b and 62b have a radius of curvature of approximately 3 µm. The wear-resistant layer 54 constitutes a contact face 59 together with a tape face 55a of the magnetic tape 55. The scraping edges 61b and 62b are used for removing possibly present agglutinations of dust and/or dirt on the tape face 55a of the magnetic tape 55 to be scanned. The cleaning grooves have a depth d of approximately 100 µm which is sufficient to collect dust and/or dirt which has been scraped off and which is small enough to be easily cleaned, for example by means of a cleaning tape. If desired, a larger depth may be used.

Reverting to Figs. 1 to 4, it is to be noted that the magnetic head 11 shown in these Figures is provided with one cleaning groove 41 only. The groove 41 has a width ranging between 100 and 300 µm. As is particularly evident from Figs. 3 and 4, the cleaning groove 41 is positioned in such a way that it is situated in the contact face 33 but not in the contact face 35. It is thereby achieved that the cleaning groove 41 is only functional if this is effective, *viz* during writing and/or reading information in a digital form. In fact, reading information in an analog form is less critical and is thus less affected by dust and dirt on the magnetic tape.

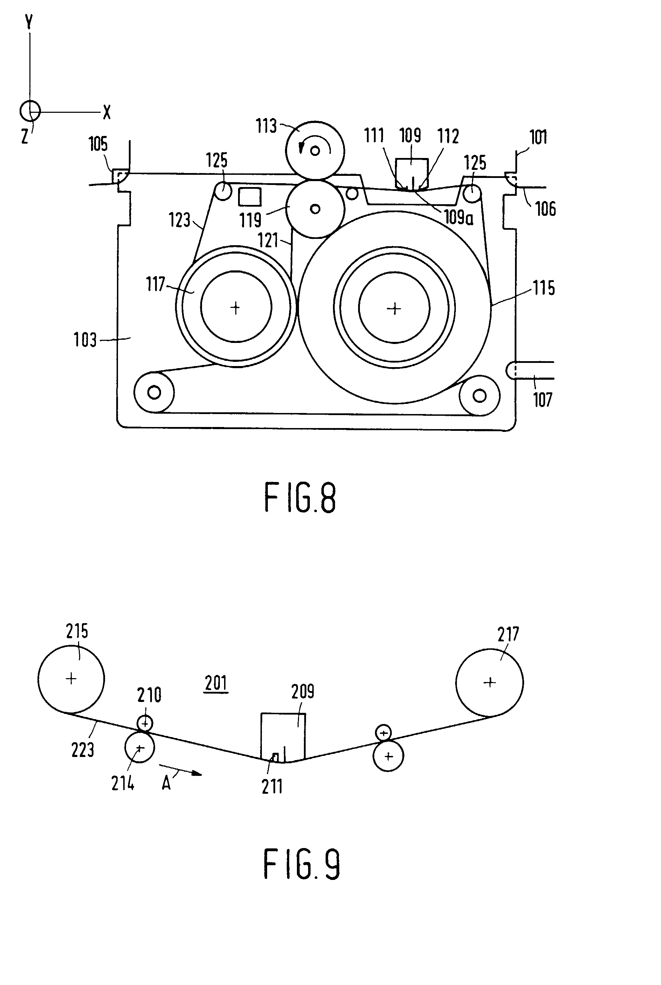

The magnetic tape system according to the invention, shown in Fig. 8, comprises a magnetic tape apparatus 101 and a magnetic tape cassette 103. The apparatus 101 has a cassette positioning device 105, 106 and 107 for positioning and retaining the cassette 103 in the XYZ, YZ and Z directions, respectively (see also the XYZ system of coordinates shown). The apparatus further comprises a magnetic head 109 according to the invention, which in this embodiment has two cleaning grooves 111 and 112 and a drive spindle 113. The magnetic head 109 may be displaced in the Y direction in a pivotal or rectilinear manner *via* a mechanism which is not shown. The cassette 103 has two reels 115 and 117 which are coupled mutually and to a drive wheel 119 by means of a rubber or synthetic material drive belt 121. A quantity of a magnetic tape 123 which is passed *via* guiding elements 125 along the magnetic head 109 projecting into the cassette 103 during scanning is provided on the two reels 115 and 117, while the required tape tension is realised by the drive belt 121. The system may also be provided with means for displacing the magnetic head 109 in the Z direction, in which case the cleaning grooves 111 and 112 extend throughout the contact face 109a of the magnetic head 109, viewed in the Z direction.

The magnetic tape system according to the invention, shown diagrammatically in Fig. 9, comprises a magnetic tape apparatus 201 which has two reels 215 and 217 on and between which a magnetic tape 223 is present. The apparatus 201 is further provided with at least one magnetic head 209 having a cleaning groove 211. The magnetic tape running along the magnetic head 209 is passed between a drive roller 213 and a pressure roller 214 for displacing it in the direction shown by way of the arrow A.

## Claims

1. A thin-film magnetic head having a head structure with a contact face (33, 35, 59, 109a) for cooperation with a tape face of a magnetic tape, and a transducing structure having at least one transducing gap (53, 57) terminating in the contact face, characterized in that the head structure is provided with at least one cleaning groove (41, 61, 62, 111, 112, 211) for cleaning the tape face, which groove terminates in the contact face (33, 35, 52, 59) and extends at least substantially parallel to the transducing gap (53, 57) and has at least one wall portion (61a, 62a) oriented at least substantially transversely to the contact face and constituting a scraping edge (61b, 62b) at the contact face, the cleaning groove at the contact face having a width dimension (w) of between 100 and 300 µm which dimension extends parallel to a direction (D) of movement of the magnetic tape, the scraping edge having a radius of curvature (r) of between 1 and 5 µm.

2. A magnetic head as claimed in Claim 1, characterized in that the contact face (59) is constituted by a wear-resistant layer (54) provided on a head face (52) of the magnetic head.

3. A method of manufacturing the thin-film magnetic head as claimed in Claim 1, characterized by the following steps to be performed consecutively:
- forming the head structure including the transducing structure and the head face (52),
- providing the cleaning groove (61, 62),
- rounding the scraping edge (61b, 62b) and
- coating the head face with the wear-resistant layer (54).

4. A magnetic tape system, characterized by the presence of a magnetic tape apparatus (1, 101, 201) and a magnetic tape, the magnetic tape apparatus being provided with a magnetic head (11, 109, 209) for writing and/or reading the magnetic tape, which magnetic head is a magnetic head as claimed in Claim 1 or 2.

5. A magnetic tape system as claimed in Claim 4, characterized in that the magnetic head is provided with first transducing means for scanning information in a digital form on a first type of magnetic tape (24) and with second transducing means for scanning information in an analog form on a second type of magnetic tape (34), a magnetic tape cassette being present which comprises magnetic tape guide means defining a first contact face (33) for the first type of magnetic tape and a second contact face for the second type of magnetic tape, the cleaning groove (41) being provided in a contact face portion of the magnetic head at the location where the first and second contact faces do not overlap each other.

6. As magnetic tape system as claimed in Claim 4, characterized by the presence of either a first type of magnetic tape (24) or a second type of magnetic tape (34), the magnetic head (11, 109, 209) having a contact face for cooperation with tape faces of the magnetic tapes and comprising a transducing structure having at least one transducing gap terminating in the contact face, which contact face is provided with at least one cleaning groove (41) for cleaning a tape face, which groove extends at least substantially parallel to the transducing gap and has at least one wall portion oriented at least substantially transversely to the contact face and constituting a scraping edge at the contact face, the transducing structure being provided with first transducing means for scanning information in a digital form on the first type of magnetic tape and with second transducing means for scanning information in an analog form on the second type of magnetic tape, a magnetic tape cassette being present which comprises magnetic tape guide means defining either a first contact face (33) for the first type of magnetic tape or a second contact face (33a) for the second type of magnetic tape, the cleaning groove being provided in a contact face portion of the magnetic head at the location where the first and second contact faces do not overlap each other.

7. A magnetic tape system as claimed in Claim 4, 5 or 6, characterized by the presence of a magnetic tape cassette provided with a tape pressure element (37) for urging the magnetic tape against the contact face (33, 35) of the magnetic head (11).

8. A magnetic tape system as claimed in Claim 4, 5, 6 or 7, characterized by the presence of a magnetic tape cassette provided with two reels (115, 117), the magnetic tape apparatus (101) having a drive spindle (113) and the magnetic tape extending between said two reels, which reels are coupled by means of a drive belt (121), which magnetic tape cassette is further provided with a drive wheel (119) which can be coupled to the drive spindle and cooperates with the drive belt.

9. A magnetic tape system as claimed in Claim 4, 5, 6, 7 or 8, characterized in that during operation the magnetic head can be displaced parallel to the transducing gap with respect to the magnetic tape, while the cleaning groove extends from a first edge to a second edge of the contact face.

10. A magnetic tape system as claimed in Claim 4, 5, 6, 7 or 8, characterized in that the magnetic tape extends between two reels (215, 217) and the magnetic tape apparatus (201) has at least one drive roller (210) and a pressure roller (214) arranged opposite said drive roller for displacing the magnetic tape along the magnetic head (209), while during operation the magnetic tape passes the cleaning groove (211) and subsequently the transducing gap.

## Revendications

1. Tête magnétique à couche mince munie d'une structure de tête présentant une face de contact (33, 35, 59, 109a) pour la coopération avec une face de bande d'une bande magnétique, et une structure de transmission présentant au moins un entrefer de transmission (53, 57) se terminant dans la face de contact, caractérisée en ce que la structure de tête est munie d'au moins une rainure de nettoyage (41, 61, 62, 111, 112, 211) servant au nettoyage de la face de bande, laquelle rainure se termine dans la face de contact (33, 35, 52, 59) et s'étend au moins pratiquement parallèlement à l'entrefer de transmission (53, 57) et présente au moins une partie de paroi (61a, 62a) orientée au moins pratiquement transversalement à la face de contact et constituant un bord de grattage (61b, 62b) à la face de contact, la rainure de nettoyage à la face de contact présentant une dimension de la largeur (w) comprise entre 100 et 300 µm, laquelle dimension s'étend parallèlement à une direction (D) du déplacement de la bande magnétique, le bord de grattage présentant un rayon de courbure (r) compris entre 1 et 5 µm.

2. Tête magnétique selon la revendication 1, caractérisée en ce que la face de contact (59) est constituée par une couche résistant à l'usure (54) appliquée sur la face de tête (52) de la tête magnétique.

3. Procédé pour la fabrication de la tête magnétique à couche mince selon la revendication 1, caractérisé par les étapes suivantes à effectuer de façon consécutive:
- la formation de la structure de tête comprenant la structure de transmission et la face de tête (52),
- la réalisation de la rainure de nettoyage (61, 62),
- l'arrondissement du bord de grattage (61b, 62b) et
- le recouvrement de la face de tête avec la couche résistant à l'usure (54).

4. Système de bande magnétique, caractérisé par la présence d'un appareil de bande magnétique (1, 101, 201) et d'une bande magnétique, l'appareil de bande magnétique étant muni d'une tête magnétique (11, 109, 209) servant à l'inscription et/ou la lecture de la bande magnétique, laquelle tête magnétique est une tête magnétique comme revendiquée dans les revendications 1 ou 2.

5. Système de bande magnétique selon la revendication 4, caractérisé en ce que la tête magnétique est munie de premiers moyens de transmission servant au balayage d'information sous forme numérique présente sur une bande magnétique d'un premier type (24) et de deuxième moyens de transmission servant au balayage d'information sous forme analogique présente sur une bande magnétique d'un deuxième type (34), une cassette à bande magnétique étant présente et comprend des moyens de guidage de bande magnétique définissant une première face de contact (33) destinée au premier type de bande magnétique et une deuxième face de contact destinée au deuxième type de bande magnétique, la rainure de nettoyage (41) étant appliquée dans une partie de la face de contact à l'endroit où les première et deuxième faces de contact ne sont pas sujettes à chevauchement, l'une par rapport à l'autre.

6. Système de bande magnétique selon la revendication 4, caractérisé par la présence, soit d'une bande magnétique d'un premier type (24), soit d'une bande magnétique d'un deuxième type (34), la tête magnétique (11, 109, 209) présentant une face de contact destinée à la coopération avec des faces de bande des bandes magnétiques et étant munie d'une structure de transmission présentant au moins un entrefer de transmission se terminant dans la face de contact, laquelle face de contact est munie d'au moins une rainure de nettoyage (41) servant au nettoyage d'une face de bande, laquelle rainure s'étend au moins pratiquement parallèlement à l'entrefer de transmission et présente au moins une partie de paroi orientée au moins pratiquement transversalement à la face de contact et constituant un bord de grattage à la face de contact, la structure de transmission étant munie de premiers moyens de transmission servant au balayage d'information présente sous forme numérique sur une bande magnétique d'un premier type et de deuxième moyens de transmission servant au balayage d'information présente sous forme analogique sur une bande magnétique d'un deuxième type, une cassette à bande magnétique étant présente et comprend des moyens de guidage de bande magnétique définissant, soit une première face de contact (33) destinée au premier type de bande magnétique, soit une deuxième face de contact (33a) destinée au deuxième type de bande magnétique, la rainure de nettoyage (41) étant appliquée dans une partie de la face de contact de la tête magnétique à l'endroit où les première et deuxième faces de contact ne sont pas sujettes à chevauchement, l'une par rapport à l'autre.

7. Système de bande magnétique selon la revendication 4, 5 ou 6, caractérisé par la présence de la cassette de bande magnétique munie d'un élément de pression de bande (37) assurant l'application de la bande magnétique contre la face de contact (33, 35) de la tête magnétique (11).

8. Système de bande magnétique selon la revendication 4, 5, 6 ou 7, caractérisé par la présence d'une cassette de bande magnétique munie de deux bobines (115, 117), l'appareil de bande magnétique (101) présentant un axe d'entraînement (113) et la bande magnétique s'étendant entre lesdites deux bobines, lesquelles bobines sont accouplées par l'intermédiaire d'une courroie d'entraînement (121), laquelle cassette de bande magnétique est en outre munie d'une roue d'entraînement (119), qui peut être accouplée à l'axe d'entraînement et qui coopère avec la courroie d'entraînement.

9. Système de bande magnétique selon la revendication 4, 5, 6, 7 ou 8, caractérisé en ce que, lors du fonctionnement, la tête magnétique peut être déplacée parallèlement à l'entrefer de transmission par rapport à la bande magnétique, alors que la rainure de nettoyage s'étend à partir d'un premier bord à un deuxième bord de la face de contact.

10. Système de bande magnétique selon la revendication 4, 5, 6, 7 ou 8, caractérisé en ce que la bande magnétique s'étend entre deux bobines (215, 217) et l'appareil de bande magnétique (201) présente au moins un rouleau d'entraînement (210) et un rouleau de pression (214) disposé en face dudit rouleau d'entraînement pour le déplacement de la bande magnétique le long de la tête magnétique (209), alors que, lors du fonctionnement, la bande magnétique passe par la rainure de nettoyage (211) et ensuite par l'entrefer de transmission.

## Patentansprüche

1. Dünnfilmmagnetkopf mit einer Kopfstruktur mit einer Kontaktfläche (33, 35, 59, 109a) zum Zusammenarbeiten mit einer Bandfläche eines Magnetbandes und mit einer Übertragungsstruktur mit mindestens einem in der Kontaktfläche endenden Übertragungsspalt (53, 57), dadurch gekennzeichnet, daß die Kopfstruktur mit wenigstens einer Reinigungsrille (41, 61, 62, 11, 112, 211) versehen ist zum Reinigen der Kopffläche, wobei diese Rille in der Kontaktfläche (33, 35, 52, 59) endet und sich wenigstens im wesentlichen parallel zu dem Übertragungsspalt (53, 57) erstreckt und wenigstens einen Wandteil (61a, 62a) aufweist, der wenigstens im wesentlichen sich quer zu der Kontaktfläche erstreckt und an der Kontaktfläche einen Schabrand (61b, 62b) bildet, wobei diese Reinigungsrille an der Kontaktfläche eine Breitenabmessung (w) aufweist zwischen 100 und 300 µm, wobei diese Abmessung sich parallel zu einer Richtung (D) des Magnerbandlaufs erstreckt, wobei der Schabrand einen Krümmungsradius (r) zwischen 1 und 5 µm hat.

2. Magnetkopf nach Anspruch 1, dadurch gekennzeichnet, daß die Kontaktfläche (59) durch eine verschleißfeste Schicht (54) gebildet wird, die auf einer Kopffläche (52) des Magnetkopfes vorgesehen ist.

3. Verfahren zum Herstellen eine Dünnfilmmagnetkopfes nach Anspruch 1, gekennzeichenet durch die nachfolgenden nacheinander durchzuführenden Verfahrensschritte:
- das Bilden der Kopfstruktur mit der Übertragungsstruktur und der Kopffläche (52),
- das Anbringen der Reinigungsrille (61, 62),
- das Runden des Schabrandes (61b, 62b) und
- das Bedecken der Kopffläche mit einer verschleißfesten Schicht (54).

4. Magnetbandsystem, gekennzeichnet durch das Vorhandensein eines Magnetbandgeräts (1, 101, 201) und eines Magnetbandes, wobei dieses Magnetbandgerät mit einem Magnetkopf (11, 109, 209) versehen ist zum Einschreiben und/oder Auslesen des Magnetbandes, wobei dieser Magnetkopf ein Magnetkopf nach Anspruch 1 oder 2 ist.

5. Magnetbandsystem nach Anspruch 4, dadurch gekennzeichnet, daß der Magnetkopf mit ersten Übertragungsmitteln versehen ist zum Abtasten von Information in digitaler Form auf einem Magnetband (24) einer ersten Art und mit zweiten Übertragungsmitteln zum Abtasten von Information in analoger Form auf einem Magnetband (34) einer zweiten Art, wobei die Magnetbandkassette mit Magnetbandführungsmitteln versehen ist, die eine erste Kontaktfläche (33) für das Magnetband der ersten Art und eine zweite Kontaktfläche für das Magnetband der zweiten Art definieren, wobei die Reinigungsrille (41) in einem Kontaktflächenteil des Magnetkopfes vorgesehen ist, wo die erste und die zweite Kontaktfläche einander nicht überlappen.

6. Magnetbandsystem nach Anspruch 4, gekennzeichnet durch das Vorhandensein entweder eines ersten Magnetbandtyps (24) oder eines zweiten Magnetbandtyps (34), wobei der Magnetkopf (11, 109, 209) eine Kontaktfläche hat zum Zusammenarbeiten mit den Bandflächen der Magnetbänder und zum Zusammenaebeiten mit der Übertragungsstruktur mit wenigstens einem Übertragungsspalt, der in der Kontaktfläche endet, wobei diese Kontaktfläche mit wenigstens einer Reinigungsrille (41) versehen ist zum reinigen einer Bandfläche, wobei diese Rille sich wenigstens im wesentlichen parallel zu dem Übertragungsspalt erstreckt und wenigstens einen Wandteil hat, der sich wenigstens im wesentlichen quer zu der Kontaktfläche erstreckt und einen Schabrand bei der Kontaktfläche bildet, wobei die Übertragungsstruktur mit ersten Übertragungsmitteln versehen ist zum Abtasten von Information in digitaler Form auf dem Magnetband des ersten Typs und mit zweiten Übertragungsmitteln zum Abtasten von Information in analoger Form auf dem Magnetband des zweiten Typs, wobei eine Magnetbandkassette vorhanden ist, die Magnetbandführungsmitteln enthält, die entweder eine erste Kontaktfläche (33) für das Magnetband des ersten Typs aufweist oder eine zweite Kontaktfläche (33a) für das Magnetband des zweiten Typs, wobei die Reinigungsrille in einem Kontaktflächenteil des Magnetkopfes vorgesehen ist an der Stelle, wo die erste und die zweite Kontaktfläche einander nicht überlappen.

7. Magnetbandsystem nach Anspruch 4, 5 oder 6, gekennzeichnet durch das Vorhandensein einer Magnetbandkassette mit einem Bandanpreßelement (37) zum Anpressen des Magnetbandes gegen die Kontaktfläche (33, 35) des Magnetkopfes (11).

8. Magnetbandsystem nach Anspruch 4, 5, 6 oder 7, gekennzeichnet durch das Vorhandensein einer Magnetbandkassette mit zwei Haspeln (115, 117), wobei das Magnetbandgerät (101) eine Antriebsspindel (113) aufweist und das Magnetband sich zwischen den genannten zwei Haspeln erstreckt, wobei diese Haspeln mittels eines Antriebsriemens (121) miteinander gekuppelt sind, wobei die Magnetbandkassette weiterhin mit einem Antriebsrad (119) versehen ist, das mit der Antriebsspindel gekuppelt werden kann und mit dem Antriebsriemen zusammenarbeitet.

9. Magnetbandsystem nach Anspruch 4, 5, 6, 7 oder 8, dadurch gekennzeichnet, daß im Betrieb der Magnetkopf parallel zu dem Übertragungsspalt gegenüber dem Magnetband verlagert werden kann, während die Reinigungsrille sich von einem ersten Rand zu einem zweiten Rand der Kontaktfläche erstreckt.

10. Magnetbandsystem nach Anspruch 4, 5, 6, 6 oder 8, dadurch gekennzeichnet, daß das Magnetband sich zwischen zwei Haspeln (215, 217) erstreckt und das Magnetbandgerät (201) wenigstens eine Tonwelle (210) und eine gegenüber der Tonwelle angeordnete Anpreßrolle (214) aufweist zum Transportieren des Magnetbandes längs des Magnetkopfes (209), während im Betrieb das Magnetband über die Reinigungsrille (211) und danach über den Übertragungsspalt geführt wird.
